# EUROPÄISCHE PATENTANMELDUNG

(11) **EP 0 857 663 A1**
(43) Veröffentlichungstag der Anmeldung: **12.08.1998**
(21) Anmeldenummer: 98810091.3
(22) Anmeldetag: 09.02.1998
(51) Int. Cl.: B65D 53/00, C09K 3/10

(54) **Behälter zur Aufbewahrung einer Flüssigkeit oder eines in einer Flüssigkeit eingelegten biologischen Präparates**

(30) Priorität: 11.02.1997 CH 293/97
(71) Anmelder: Oberer, Christoph, 4410 Liestal (CH)
(72) Erfinder: Oberer, Christoph, 4410 Liestal (CH)
(74) Vertreter: Eder, Carl E.

(57) **Zusammenfassung**

Die Dichtungen bekannter Konservierungsbehälter sind irreversibel verformbar und erlauben daher kein wiederholtes Öffnen und Schliessen des Behälters. Die bekannten Dichtungen sind zudem nicht alterungsbeständig, so dass mit der Zeit Bestandteile der Konservierungsflüssigkeit aus dem Behälter entweichen, was eine nachteilige Änderung der chemischen Zusammensetzung der vorgelegten Konservierungsflüssigkeit zur Folge hat. Es wurde ferner festgestellt, dass bei der Verwendung von alkoholischen Konservierungsflüssigkeiten nicht das relativ grosse Alkoholmolekül in verhältnismässig grossen Mengen durch Diffusion verloren geht, so wie das von der Fachwelt derzeit angenommen wird, sondern das ebenfalls in grossen Mengen in der Konservierungsflüssigkeit enthaltene, kleine Wassermolekül. Die Erfindung hat daher einen neuartigen, mehrfach wiederverschliessbaren Konservierungsbehälter zum Gegenstand, dessen Dichtung mindestens zum Teil aus einem alterungsbeständigen, reversibel verformbaren Kunststoff besteht und eine Wasserdampfdurchlässigkeit besitzt, welche bei einer Schichtdicke von 40 µm kleiner als 100 g/24h·m² ist.

## Beschreibung

Die Erfindung betrifft einen Behälter zur Aufbewahrung einer flüchtige Bestandteile aufweisenden Flüssigkeit oder eines in einer Flüssigkeit eingelegten biologischen Präparates, nämlich einen Behälter gemäss dem Oberbegriff des Anspruchs 1.

Die Konservierung von biologischen Präparaten in Flüssigkeiten gewinnt sowohl in der Forschung als auch in der angewandten Wissenschaft immer mehr an Bedeutung. Mit den bekannten Konservierungsbehältern ist - wie nachfolgend noch erläutert wird - eine langfristige und sichere Aufbewahrung von biologischen Präparaten nicht unproblematisch. So sind die bekannten Konservierungsbehälter mit nicht alterungsbeständigen Dichtungen versehen. Zudem lassen sich die Konservierungsbehälter nicht absolut fluiddicht verschliessen, so dass mit der Zeit Bestandteile der Konservierungsflüssigkeit sowie auch Gase, wie zum Beispiel Kohlendioxid, durch die Gefässwand und insbesondere durch die zum Beispiel im Deckelboden eingesetzte Dichtung hindurch nach aussen diffundieren, was nicht nur eine Reduktion des Flüssigkeitsvolumens sondern auch eine für die Aufbewahrung biologischer Präparate nachteilige Änderung der chemischen Zusammensetzung der vorgelegten Konservierungsflüssigkeit zur Folge hat.

Bis heute werden daher die sowohl in Museen also auch in wissenschaftlichen Forschungsanstalten gehaltenen und in Konservierungsbehältern der vorstehend genannten Art aufbewahrten Präparate regelmässig durch ein fachkundiges Personal überprüft, wobei dann bei einer sichtbaren Volumenreduktion Konservierungsflüssigkeit nachgefüllt und gegebenenfalls die eine oder andere Dichtung ersetzt werden muss. Als Konservierungsflüssigkeit dient hierbei in den meisten Fällen eine Lösung mit 70 - 80 Vol.% Ethanol und verschiedenen anderen Zusatzstoffen, wie etwa Isopropylalkohol, Methylether, Toluol und diversen Estern.

Die Deckel bekannter Konservierungsbehälter sind mechanisch instabil und erlauben in den meisten Fällen kein wiederholtes Öffnen und Schliessen des Gefässes. Das heisst, die bekannten Deckel werden sich mit der Zeit durch den im Gefäss herrschenden Dampfdruck verformen und müssen nach dem erstmaligen Öffnen des Gefässes des öfteren zusammen mit der im Deckelboden eingesetzten Dichtung ersetzt werden. Dazu kommt, dass viele der bekannten Verschlüsse so ausgebildet sind, dass der zum Aufschrauben auf das Glasgefäss bestimmte Deckel beim Verschliessen überdreht werden kann. Diese Überdrehung sowie auch die Dampfdruck-bedingte Verformung des Deckels hat dann zur Folge, dass der Deckel nicht den konstanten Druck auf die Dichtung ausübt, der für eine beispielsweise mehrere Jahre anhaltende optimale Abdichtung des Behälters nötig ist.

Die Dichtungen sowohl bekannter Konservierungsbehälter als auch bekannter Behälter zur Aufbewahrung von flüchtigen Bestandteilen enthaltenden Flüssigkeiten bestehen beispielsweise aus Kork oder Gummi. Sie sind gegenüber mehreren Substanzen, wie zum Beispiel gegenüber Aldehyden, Basen und organischen Säuren unbeständig und besitzen eine verhältnismässig hohe Gasdurchlässigkeitsrate. Dazu kommt, dass die bekannten Gummidichtungen auch noch unbeständig gegenüber dem in hoher Konzentration in der Umgebungsluft enthaltenen Stickstoff sind. Kork- und Gummidichtungen besitzen also nur eine beschränkte chemische Beständigkeit, sind demnach nicht alterungsbeständig und neigen dazu, mit der Zeit zu verspröden, was insbesondere bei der Konservierung von biologischen Präparaten einen zusätzlichen Flüssigkeitsverlust durch Diffusion zur Folge hat. Dies gilt in analoger Weise auch für die bereits heute verwendeten Kunststoffdichtungen.

Der Erfindung liegt nun die Aufgabe zu Grunde, einen Behälter zur Aufbewahrung eines flüchtige Bestandteile enthaltenden Mediums oder einen Konservierungsbehälter für biologische Präparate vorzuschlagen, der Nachteile bekannter Behälter nicht aufweist. Im Falle eines Konservierungsbehälter soll dieser insbesondere eine einfache, langfristige und stabile, mindestens aber mehrere Jahre andauernde Aufbewahrung von biologischen Präparaten ermöglichen, ohne dass dabei die Konservierungsflüssigkeit ihre Zusammensetzung so ändert, dass dadurch eine nachteilige Beeinträchtigung des Präparates in Kauf zu nehmen ist.

Diese Aufgabe wird erfindungsgemäss durch einen mehrfach wiederverschliessbaren Behälter mit den Merkmalen des Patentanspruchs 1 gelöst.

Vorteilhafte Ausgestaltungen der Erfindung sind Gegenstand der abhängigen Ansprüche.

Die Erfindung zeichnet sich im wesentlichen dadurch aus, dass ein wiederholtes Öffnen und Schliessen des Behälters möglich ist und dass die im verschlossenen Zustand zwischen Deckel und Einfüllöffnung eingesetzte Dichtung mindestens zum Teil aus einem reversibel verformbaren, chemisch und physikalisch in weiten Grenzen beständigen Kunststoff besteht und eine Wasserdampfdurchlässigkeit besitzt, welche bei einer Schichtdicke von 40 µm kleiner als 100 g/24h·m² ist.

Die Einfüllöffnung des erfindungsgemässen Glasgefässes ist mit einem gegenüber mechanischen Verformungen stabilen Metall-, Kunststoff- oder Glasdeckel verschliessbar. Dieser beispielsweise aus Aluminium oder Stahlblech gebildete Deckel muss die Dichtung, welche im befestigten Zustand auf dem die Einfüllöffnung begrenzenden Glasrand aufliegt, so stark komprimieren, dass diese im Bereich des Glasrandes satt passend und absolut dicht am Glasgefäss und am Deckel anliegt und beim Öffnen des Behälters wieder ihre ursprüngliche Form zurückerlangt, also reversibel komprimierbar bleibt. Zudem muss der Deckel so stabil sein, dass er sich durch den sich im Gefässinnenraum ausbildenden Innendruck nicht verformen lässt, was, wie bereits eingangs erwähnt, die Kunststoffdichtung unwirksam machen könnte.

Falls ein Gefäss mit einem Schraubdeckel verwendet wird, müssen die Glasführungen am Gefässhals so auf das Innengewinde des Deckels abgestimmt sein, dass sie von diesem vollständig aufgenommen werden. Beim Verschliessen mit einem Schraubdeckel ist es ferner wichtig, dass der Deckel nicht überdreht werden kann, was unter Umständen nachteilig für die Dichtigkeit des Behälters ist.

Bei der Arbeit mit biologischen Präparaten wurde überraschend festgestellt, dass nicht das relativ grosse Alkoholmolekül in verhältnismässig grossen Mengen durch Diffusion verloren geht, so wie das bis heute angenommen wurde, sondern das ebenfalls in grossen Mengen in der Konservierungsflüssigkeit enthaltene, kleine Wassermolekül. Die verhältnismässig hohe und bis heute kaum beachtete Diffusionsrate von Wasser bzw. Wasserdampf hat nun - was die vorgelegte Konservierungsflüssigkeit betrifft - eine nicht zu vernachlässigende Erhöhung der Ethanolkonzentration sowie auch eine ebenfalls nicht zu vernachlässigende Konzentrations-Erhöhung der eingangs genannten Zusatzstoffe zur Folge. Diese Konzentrationserhöhungen können nämlich durch das regelmässige Nachfüllen mit frischer, vorzugsweise 70 - 80 Vol.% Alkohol enthaltenden Konservierungsflüssigkeit nicht ausgeglichen werden, so dass die vorgelegte Konservierungsflüssigkeit mit der Zeit eine für das Präparat ungünstige Zusammensetzung annehmen kann. Die erhöhte Wasserdampf-Diffusion ist bei den bekannten Konservierungsbehältern insbesondere darauf zurückzuführen, dass die in diesen Behältern eingesetzten Kork- und Gummidichtungen eine verhältnismässig hohe Wasserdampfdurchlässigkeit besitzen.

Die Erfindung zeichnet sich für diesen speziellen Fall im wesentlichen dadurch aus, dass das Dichtungsmittel des erfindungsgemässen Konservierungsbehälters mindestens zum Teil aus einem fluorhaltigen Kunststoff und/oder einem Polyolefin besteht, chemisch oder physikalisch sterilisierbar ist, und eine Wasserdampfdurchlässigkeit besitzt, welche bei einer Schichtdicke von 40 µm kleiner als 100 g/24h·m² ist.

Fluorhaltige Kunststoffe sind gegenüber einer Vielzahl von Substanzgruppen beständig. Auch haben solche Kunststoffe eine ausserordentlich hohe chemische und thermische Beständigkeit. Sie sind also alterungsbeständig.

Zu den für den erfindungsgemässen Zweck verwendbaren fluorhaltigen Kunststoffverbindungen gehören unter anderem Tetrafluorethylen-Hexafluorpropylen-Copolymerisat (FEP), Perfluoralkoxy-Copolymerisat (PFA), Polytetrafluorethylen (PTFE) und Polyvinylidenfluorid (PVDF). Insbesondere den drei erstgenannten Verbindungen, nämlich dem FEP, PFA und PTFE kommt hierbei eine zentrale Bedeutung zu. Sie zeigen nämlich eine ausserordentlich gute chemische Beständigkeit gegenüber Aldehyden, Alkoholen, Aminen, Basen, Estern, Ethern, Ketonen und organischen Säuren, sowie auch gegenüber den in beachtlichen Mengen in Konservierungsflüssigkeiten enthaltenen Zusatzstoffen.

Weitere erfindungsgemässe Dichtungen sind Elastomere, welche sich insbesondere für Behälter zur Aufbewahrung von flüchtigen Flüssigkeiten eignen. Beispiele dafür sind halogenierte Copolymere aus Isopren und Isobutylen, so etwa das unter der Handelsbezeichnung BIIR bekannte Brombutyl-Elastomer, oder die verschiedenen Vertreter der Polyepichlorhydrin-Vulkanisate. So besitzen zum Beispiel die Polyepichlorhydrin-Vulkanisate eine hohe Wärmebeständigkeit und zeigen ein gutes Brandschutzverhalten. Diese Verbindungen sind darüber hinaus noch bei Temperaturen von 130°C bis 150°C hitzebeständig und weisen eine Wasserdampfdurchlässigkeit von weniger als 100 g/24h·m² pro 40 µm Schichtdicke auf.

Auch Polyolefine zeigen, wenn auch in zum Teil geringerer Ausprägung als die fluorhaltigen Kunststoffe, die für die erfindungsgemässe Verwendung nötige Alterungsbeständigkeit und geringe Wasserdampfdurchlässigkeit. Polyolefine sind teilkristalline Thermoplaste, die sich durch eine gute chemische Beständigkeit gegenüber Alkoholen, Aldehyden, Basen und organischen Säuren, sowie auch durch eine hohe Zähigkeit und Reissdehnung auszeichnen.

Zu den für den erfindungsgemässen Zweck verwendbaren Polyolefinen gehören insbesondere Polyethylen (PE), Poly-4-methylpenten-1 (PMP), Polypropylen (PP) und Polyvinylchlorid (PVC).

Erfindungsgemäss können die Verbindungen der vorstehend genannten Verbindungsklassen einzeln oder in Kombination miteinander zur Herstellung einer Dichtung der nachfolgend beschriebenen Art verwendet werden, hierbei ist selbstverständlich auch eine Kombination von Kunststoffen aus allen drei Verbindungsklassen möglich.

Bei besonders bevorzugten Ausführungsformen der Erfindung besteht das Dichtungsmittel aus reinem Polytetrafluorethylen (PTFE), so zum Beispiel aus dem unter dem Handelsnamen GORE-TEX GR® bekannten Dichtungsmaterial der Firma W. L. Gore & Associates GmbH. Dieses Material ist reversibel verformbar und besitzt eine Temperaturbeständigkeit von bis zu 270°C sowie eine sehr geringe Gasdurchlässigkeit - insbesondere aber eine sehr geringe Wasserdampfdurchlässigkeit - von 0,003 g/24h·m² pro 40 µm Schichtdicke.

Reines PTFE ist darüber hinaus ausgesprochen alterungsbeständig. Ein weiterer wesentlicher Vorteil von reinem PTFE (zum Beispiel GORE-TEX GR®) liegt in seiner reversiblen Kompressibiltät, welche die Verwendung dieses Materials für mehrfach wiederverschliessbare Konservierungsbehälter möglich macht.

Erfindungsgemäss kann das reine PTFE ohne weitere Komponente als Dichtungsmittel eingesetzt werden. Es kann aber auch zusammen mit einer die Gaspermeabilität von PTFE weiter reduzierenden duktilen Metallfolie kombiniert werden. Bevorzugte Metallfolien sind dabei solche aus Tantal oder Gold. Es können jedoch auch Folien aus anderen Metallen, aus Metall-Legierungen oder Metallverbindungen mit PTFE kombiniert werden. Bei der zusätzlichen Verwendung einer beispielsweise aus Tantal oder Gold gebildeten und vorzugsweise 0,01 mm bis 0,1 mm dicken Metallfolie ist vorgesehen, diese auf einer PTFE Dichtung zu befestigen oder zwischen mindestens zwei PTFE-Dichtungen anzuordnen.

Bei der Präparation eines zum Beispiel menschlichen oder tierischen Organs ist es notwendig, den dafür zu verwendenden Konservierungsbehälter zuvor zu sterilisieren. Dies kann entweder chemisch, so zum Beispiel mittels Formalin, oder aber physikalisch durch Autoklavieren geschehen. Sowohl das PTFE als auch die gegebenenfalls mit PTFE kombinierten duktilen Metallfolien sowie alle vorstehend genannten Stoffe sind beständig gegenüber chemischer oder physikalischer Sterilisation. Diese erfindungsgemässen Dichtungsmittel lassen daher eine Gefäss-Sterilisation ohne weiteres zu.

Falls der Konservierungsbehälter zur Aufbewahrung von wiederverwendbarem biologischem Material, wie zum Beispiel von Zell- und Gewebekulturen, verwendet werden soll, so muss auch die zur Abdichtung des Behälters verwendete Dichtung aus physiologisch unbedenklichem Material bestehen. Dies trifft gemäss der Erfindung nicht nur für PTFE, FEP und PVDF, sondern auch für die vorstehend genannten Elastomere, Polyolefine und die genannten Metalle zu.

Der erfindungsgemässe Konservierungsbehälter besitzt ein durchsichtiges oder eingefärbtes Glasgefäss, wobei die Qualität solcher Gefässe insbesondere so gewählt ist, dass keine für die Konservierung nachteiligen Reaktionen zwischen Glas und Inhalt ablaufen. In einer speziellen Ausführungsform der Erfindung kann das Glasgefäss noch zusätzlich mit einer durchsichtigen Polyethylenschicht ummantelt sein, welche als Zersplitterungs-Schutz dient. Diese Schicht kann dabei noch zusätzlich mit einer Vielzahl von mikroskopischen Löchern versehen sein. Fällt ein derart behandeltes Glasgefäss zu Boden, so kommt es nicht zur explosionsartigen Zersplitterung des Glasgefässes, so wie das etwa bei herkömmlichen Glasgefässen zu erwarten ist. In diesem besonderen Fall kommt es vielmehr zu einer kontrollierten Druckentlastung über die poröse Polyethylenschicht, wobei letztere dann das durch den Aufschlag zersplitterte Glasgefäss derart zusammenhält, dass das unter Umständen doch sehr wertvolle Präparat noch gerettet und ohne nachteilige Folgen in einen neuen Konservierungsbehälter übergeführt werden kann.

Nachfolgend werden nun anhand der Zeichnung drei Ausführungsbeispiele von erfindungsgemässen Konservierungsbehältern beschrieben. In der Zeichnung zeigt
die Figur 1 einen Schnitt durch ein erstes Glasgefäss, das mit einem Schraubdeckel und einem im Deckelboden eingesetzten kreisrunden Dichtungsring verschlossen ist,
die Figur 2 eine Ansicht auf den Verschluss eines zweiten Konservierungsbehälters,
die Figur 3 den zum Teil in Ansicht dargestellten Schraubverschluss eines dritten Konservierungsbehälters mit vom Verschlusshals losgelöstem Deckel,
die Figur 4 ein Ansicht des Deckels in Pfeilrichtung IV der Figur 3,
die Figur 5 ein Ansicht des Deckels in Pfeilrichtung V der Figur 3, und
die Figur 6 eine Ansicht des zum dritten Ausführungsbeispiel gehörenden Dichtungsringes.

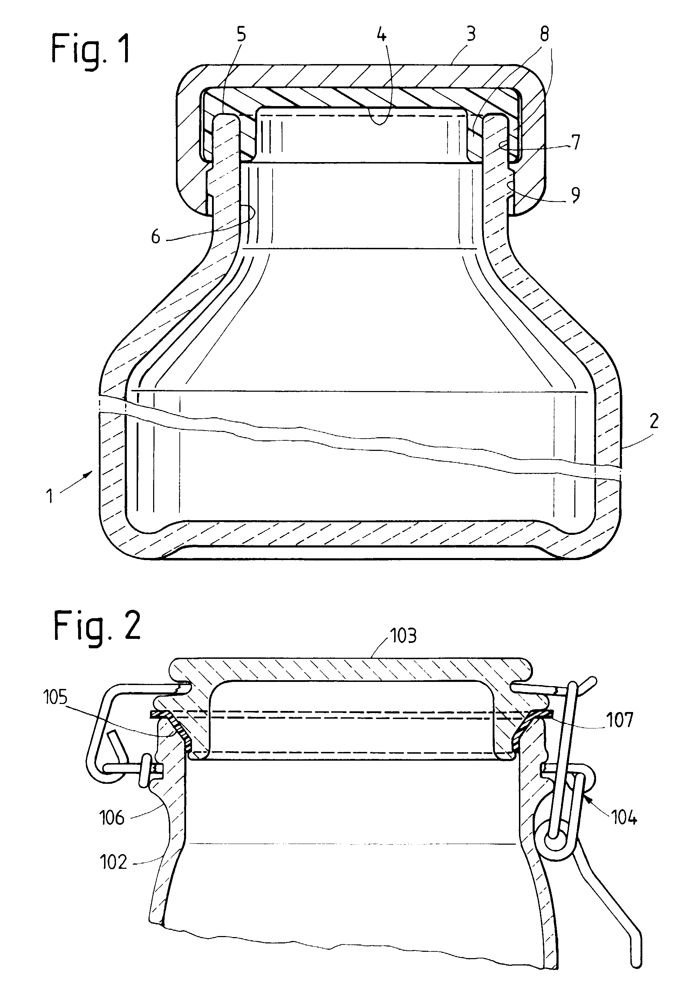

Der in der Figur 1 dargestellte und als ganzes mit 1 bezeichnete erste Konservierungsbehälter zeigt eine Glasflasche 2 mit einem auf der Flasche 2 lösbar befestigten metallischen Deckel 3. Im Deckel 3 ist eine kreisrunde Dichtung 4 der vorstehend beschriebenen Art eingesetzt, welche derart ausgebildet und dimensioniert ist, dass sie im befestigten Zustand über den Rand der Einfüllöffnung, im hier vorliegenden Beispiel über die ringförmige Stirnfläche 5 des Flaschenhalses 6, vorsteht und den oberen Randbereich 7 des Flaschenhalses 6 beidseitig, dass heisst sowohl an der Halsinnenseite als auch an der Halsaussenseite mit zwei ringförmigen Dichtungslippen 8 ummantelt. Diese beidseitige Ummantelung des Flaschenhalses 6 erlaubt dann eine optimale Verschliessung des Gefässes 2, wenn der Deckel 3 so auf die mindestens eine Schraubenrippe 9 aufgeschraubt ist, dass die Dichtung 4 im Bereich der Stirnfläche 5 reversibel komprimiert ist und satt passend an der Glasflasche 2 und am Deckel 3 anliegt.

Die in der Figur 2 dargestellte zweite Ausführungsform eines Konservierungsbehälters besteht aus einer Glasflasche 102 mit einem an diesem angelenkten Glasdeckel 103. Zur Verschliessung der Flasche 102 lässt sich hierbei der Glasdeckel 103 mittels einer Spannvorrichtung 104 am Flaschenhals 106 befestigen, und zwar so, wie das bereits für die verschiedensten, im Haushalt verwendbaren Glasgefässe bekannt ist. Flaschenrand 105 und Glasdeckel 103 sind im hier vorliegenden Fall mit zueinander passenden, schräg angeschliffenen Auflagerändern versehen, zwischen welchen im verschlossenen Zustand eine zumindest den Flaschenrand 105 randseitig überragende, ringförmige Dichtung 107 aus zum Beispiel GORE-TEX GR® angeordnet ist.

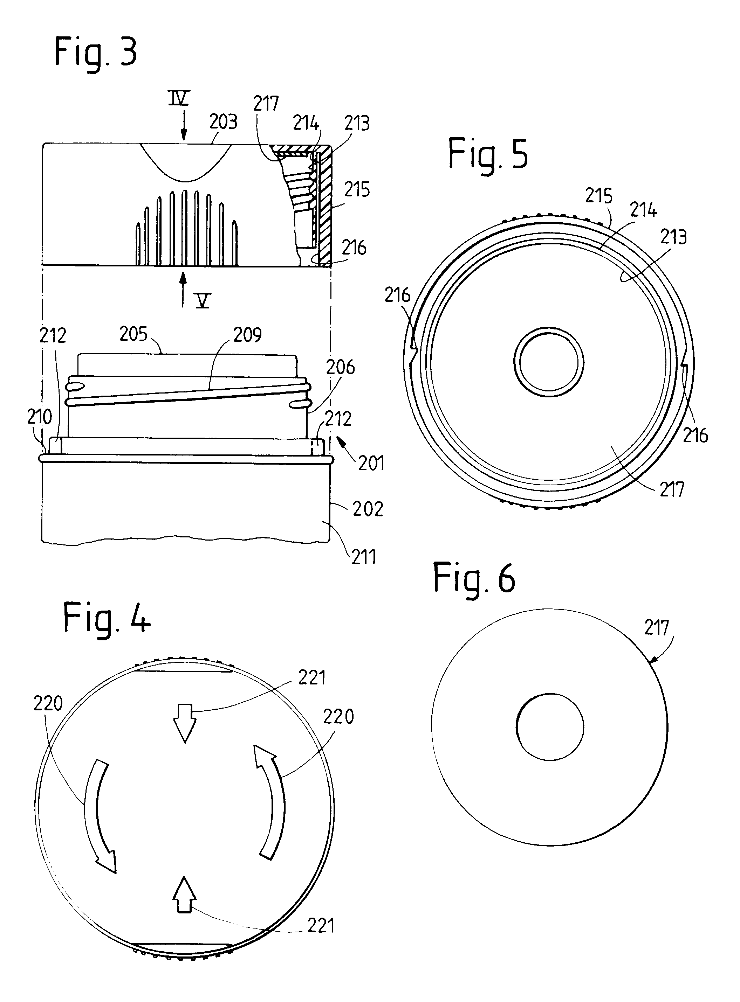

Der in den Figuren 3 bis 7 dargestellte und als ganzes mit 201 bezeichnete dritte Konservierungsbehälter besitzt eine Glasflasche 202, auf welcher ein Kunststoffdeckel 203 lösbar befestigt werden kann. Wie der Flaschenhals 6 des Behälters 1, so besitzt auch der Flaschenhals 206 dieses Konservierungsbehälters 201 mindestens eine zum Aufschrauben des Deckels 203 bestimmte Rippe 209. Demgegenüber sitzt aber der Flaschenhals 206 dieser Ausführungsform auf einer Schulter 210 des Flaschenbauches 211, so wie das aus der Figur 3 gut ersichtlich ist. Die Schulter 210 weist nun ihrerseits zwei einander diagonal gegenüberliegende, keilartige Anschläge 212 für den Deckel 203 auf. Letzterer besitzt einen doppelwandigen Mantel mit einem ein Innengewinde 213 aufweisenden Innenmantelteil 214 und einem Aussenmantelteil 215. Der Aussenmantelteil 215 ist im gezeichneten Ausführungsbeispiel mit zwei einander gegenüberliegenden und zur Deckelachse parallel verlaufenden sowie zum Anstossen an die Anschläge 212 bestimmten Längsrippen 216 versehen. Im vom Innenmantelteil 214 begrenzten Deckelboden ist schliesslich ein Dichtungsring 217 aus reinem PTFE oder einem ähnlich geeigneten Material vorgesehen, der derart dimensioniert ist, dass er im befestigten Zustand über die Stirnfläche 205 des Flaschenhalses 206 vorsteht.

Beim Verschliessen des Konservierungsbehälters 201 wird der Deckel 203 in zur Pfeilrichtung 220 entgegengesetzter Richtung gedreht, und zwar soweit, bis die beiden vertikalen Rippen 216 des Deckels 203 über jeweils einen Anschlag 212 geführt worden sind. Eine für eine optimale Abdichtung des Behälters ungünstige Überdrehung des Deckels 203 über den zweiten Anschlag 212 ist aufgrund der keilartigen Form der Anschläge 212 und Rippen 216 nicht möglich.

Zum Öffnen des Behälters 201 wird der Kunststoffdeckel 203 zuerst in Pfeilrichtung 221 zusammengedrückt und dann in Pfeilrichtung 220 aufgeschraubt.

## Patentansprüche

1. Zur Aufbewahrung eines flüssigen Mediums oder eines in einem flüssigen Medium eingelegten biologischen Präparates dienender Behälter (1, 201) mit einem eine Einfüllöffnung aufweisenden Glasgefäss (2, 102, 202) und einem Deckel (3, 103, 203), wobei zwischen dem Deckel (3, 103, 203) und dem Rand (5, 105) der Einfüllöffnung ein Dichtungsmittel (4, 107, 217) vorgesehen ist, dadurch gekennzeichnet, dass Deckel (3, 103, 203) und Dichtungsmittel (4, 107, 217) derart ausgebildet sind, dass ein wiederholtes Öffnen und Schliessen der Einfüllöffnung möglich ist und dass das Dichtungsmittel mindestens zum Teil aus einem reversibel verformbaren Kunststoff besteht, bei Temperaturen bis zu 130°C hitzebeständig ist und eine Wasserdampfdurchlässigkeit besitzt, welche bei einer Schichtdicke von 40 µm kleiner als 100 g/24h·m² ist.

2. Behälter nach Anspruch 1, dadurch gekennzeichnet, dass das Dichtungsmittel mindestens zum Teil aus einem halogenierten Copolymer aus Isopren und Isobutylen besteht.

3. Behälter nach Anspruch 1, dadurch gekennzeichnet, dass das Dichtungsmittel mindestens zum Teil aus einem Polyepichlorhydrin-Vulkanisat besteht.

4. Behälter nach Anspruch 1, dadurch gekennzeichnet, dass das Dichtungsmittel mindestens zum Teil aus Tetrafluorethylen-Hexafluorpropylen-Copolymerisat und/oder Perfluoralkoxy-Copolymerisat und/oder Polytetrafluorethylen und/oder Polyvinylidenfluorid besteht.

5. Behälter nach Anspruch 1, dadurch gekennzeichnet, dass das Dichtungsmittel aus reinem Polytetrafluorethylen besteht.

6. Behälter nach Anspruch 1, gekennzeichnet durch ein mindestens zweischichtiges Dichtungsmittel, welches eine Schicht aus reinem Polytetrafluorethylen und eine duktile Metallschicht besitzt.

7. Behälter nach Anspruch 6, dadurch gekennzeichnet, dass das Dichtungsmittel dreischichtig ist, wobei zwischen zwei Schichten aus reinem Polytetrafluorethylen eine duktile Metallschicht angeordnet ist.

8. Behälter nach Anspruch 1, dadurch gekennzeichnet, dass das Dichtungsmittel mindestens zum Teil aus Polyethylen (PE), Poly-4-methylpenten-1 (PMP), Polypropylen (PP) oder Polyvinylchlorid (PVC) besteht.

9. Behälter nach Anspruch 1, gekennzeichnet durch ein Dichtungsmittel bestehend aus einer Kombination von Verbindungen aus den Ansprüchen 2 bis 8.

10. Behälter nach einem der Ansprüche 1 bis 9, dadurch gekennzeichnet, dass das Glasgefäss mit einer Polyethylenschicht ummantelt ist.

11. Behälter nach Anspruch 10, dadurch gekennzeichnet, dass die Polyethylenschicht noch zusätzlich mit einer Vielzahl von mikroskopischen Löchern versehen ist.

12. Behälter nach einem der Ansprüche 1 bis 11, dadurch gekennzeichnet, dass die Dichtung (4) im befestigten Zustand über den Rand der Einfüllöffnung vorsteht und den oberen Randbereich (7) des die Einfüllöffnung bildenden Halses (6) beidseitig, also sowohl an der Halsinnenseite als auch an der Halsaussenseite mit je einer ringförmigen Dichtungslippen (8) ummantelt.
